# EUROPÄISCHE PATENTANMELDUNG

(11) **EP 2 323 012 A2**
(43) Veröffentlichungstag der Anmeldung: **18.05.2011**
(21) Anmeldenummer: 10182261.7
(22) Anmeldetag: 29.09.2010
(51) Int. Cl.: G06F 1/32

(54) **Energiesparschaltung für ein Peripheriegerät, Peripheriegerät, Vermittlungsgerät und Arbeitsverfahren**

(30) Priorität: 12.11.2009 DE 102009052947
(71) Anmelder: Fujitsu Technology Solutions Intellectual Property GmbH, 80807 München (DE)
(72) Erfinder: Markel, Ottwald, 86199, Augsburg (DE); Kastl, Peter, 86529, Schrobenhausen (DE); Hornung, Stephan, 86863, Langenneufnach (DE)
(74) Vertreter: Epping - Hermann - Fischer

(57) **Zusammenfassung**

Die Erfindung betrifft eine Energiesparschaltung (3) für ein Peripheriegerät (2) zum Anschluss an einen Datenbus eines Hostsystems (1). Die Energiesparschaltung (3) umfasst eine Überwachungsschaltung (7) zur Überwachung einer Kommunikation über den Datenbus, eine Halteschaltung (8) zum Halten eines Verbindungszustands des Peripheriegerätes (2), wenigstens ein Schaltelement (6, 18) zum Unterbrechen einer Versorgungsspannung für das Peripheriegerät (2) sowie eine Steuerschaltung (9). Die Steuerschaltung ist dazu eingerichtet, einen Beginn eines Leerlaufzustand des Datenbusses durch die Überwachungsschaltung (7) zu erkennen, bei Erkennung eines Beginns des Leerlaufzustands den Verbindungszustands des Peripheriegerätes (2) durch Aktivieren der Halteschaltung (8) zu halten und eine Zufuhr der Versorgungsspannung für das Peripheriegerät (2) durch Öffnen des wenigstens einen Schaltelementes (6, 18) zu unterbrechen.

Die Erfindung betrifft außerdem ein Peripheriegerät (2), ein Vermittlungsgerät (27) sowie ein Arbeitsverfahren für eine derartige Energiesparschaltung (3).

## Beschreibung

Die vorliegende Erfindung betrifft eine Energiesparschaltung für ein Peripheriegerät zum Anschluss an einen Datenbus eines Hostsystems. Darüber hinaus betrifft sie ein Peripheriegerät und ein Vermittlungsgerät für einen Datenbus mit einer derartigen Energiesparschaltung sowie ein Arbeitsverfahren für eine derartige Energiesparschaltung.

Peripheriegeräte zum Anschluss an einen Datenbus eines Hostsystems sind vielfach bekannt. Beispiele solcher Peripheriegeräte sind externe Speicherlaufwerke, Drucker oder Scanner, die mit einem Hostadapter eines Computersystems verbunden sind. Aber auch in anderen Bereichen der Technik werden Peripheriegeräte über Datenbusse angeschlossen. Beispiele hierfür sind Geräte der Unterhaltungselektronik oder der Kommunikationselektronik.

Viele Peripheriegeräte weisen ein eigenes Netzteil zur Versorgung des Peripheriegerätes mit einer Betriebsspannung auf. Dies hat zur Folge, dass die Peripheriegeräte in der Regel auch beim Abschalten eines Hostsystems weiter mit Energie versorgt werden. Dabei verursacht sowohl das Peripheriegerät selbst als auch das zur Versorgung des Peripheriegerätes genutzte Netzteil eine Verlustleistung. Diese Verlustleistung besteht in der Regel zu einem großen Teil aus Verlusten von Schaltwandlern des Netzteils.

Aus der DE 10 2007 052 880 A1 ist eine elektronische Stromversorgungseinheit bekannt, die eine Steuereinheit aufweist, welche spannungswandelnde Elemente eines Netzteils abhängig von einem Leistungsbedarf eines daran angeschlossenen elektronischen Gerätes von einer primärseitigen Wechselspannung trennt. Durch die bekannte Schaltung kann somit die Aufnahme elektrischer Leistung in einem Bereitschaftszustand des Peripheriegerätes weitgehend vermieden werden.

Die Lösung gemäß dem Stand der Technik weist jedoch den Nachteil auf, dass unter Umständen eine unbeabsichtigte Deaktivierung des Peripheriegerätes stattfindet, wenn dessen Leistungsaufnahme absinkt, ohne dass eine Kommunikation mit einem Hostsystem unterbrochen wurde. Dies führt unter Umständen zu einer Fehlermeldung auf Seiten eines mit dem Peripheriegerät verbundenen Hostsystems, wenn das Peripheriegerät wider Erwarten nicht mehr über einen Datenbus ansprechbar ist. Des Weiteren kann es hierbei auch zu Datenverlusten kommen, insbesondere beim Ansprechen von Massenspeichermedien.

Aufgabe der vorliegenden Erfindung ist es, eine Energiesparschaltung für ein Peripheriegerät zum Anschluss an einen Datenbus eines Hostsystems zu beschreiben, das eine Leistungsaufnahme des Peripheriegerätes in einem Bereitschaftszustand vermindert ohne eine Kommunikation des Datenbusses zu stören.

Darüber hinaus sollen ein Peripheriegerät, ein Vermittlungsgerät und ein Arbeitsverfahren beschrieben werden, die zur Verwendung mit der Energiesparschaltung geeignet sind.

Die oben genannten Aufgabe wird durch eine Energiesparschaltung für ein Peripheriegerät zum Anschluss an einen Datenbus eines Hostsystems gelöst, wobei die Energiesparschaltung eine Überwachungsschaltung zur Überwachung einer Kommunikation über den Datenbus, eine Halteschaltung zum Halten eines Verbindungszustands des Peripheriegerätes und wenigstens ein Schaltelement zum Unterbrechen einer Versorgungsspannung für das Peripheriegerät aufweist. Die Energiesparschaltung umfasst des Weiteren eine Steuerschaltung, die dazu eingerichtet ist, einen Beginn eines Leerlaufzustands des Datenbusses durch die Überwachungsschaltung zu erkennen und bei Erkennung eines Beginns des Leerlaufzustands den Verbindungszustand des Peripheriegerätes durch Aktivieren der Haltespannung zu halten sowie eine Zufuhr der Versorgungsspannung für das Peripheriegerät durch Öffnen des wenigstens einen Schaltelementes zu unterbrechen.

Durch Halten eines Verbindungszustands des Peripheriegerätes durch eine Halteschaltung kann auch während eines Leerlaufzustandes des Datenbusses der Anschein einer Bustrennung für das Hostsystem unterbunden werden. Dabei übernimmt die Energiesparschaltung während des Leerlaufzustands des Datenbusses die Funktion, einen Verbindungszustand aufrecht zu erhalten, so dass das Peripheriegerät ohne Störung der Kommunikation über den Datenbus von einer Versorgungsspannungszufuhr getrennt werden kann.

Gemäß einer vorteilhaften Ausgestaltung ist die Steuerschaltung des Weiteren dazu eingerichtet, ein Ende eines Leerlaufzustands des Datenbusses durch die Überwachungsschaltung zu erkennen. Die Steuerschaltung stellt bei Erkennung eines Endes des Leerlaufzustandes die Zufuhr der Versorgungsspannung für das Peripheriegerät durch Schließen des wenigstens einen Schaltelementes wieder her und gibt den Verbindungszustand des Peripheriegerätes durch Deaktivieren der Halteschaltung frei. Durch die zusätzliche Erkennung eines Endes des Leerlaufzustandes und das Wiederverbinden des Peripheriegerätes mit der Versorgungsspannung sowie der Deaktivierung der Halteschaltung kann der Betriebszustand, der vor Beginn des Leerlaufzustandes vorgelegen hat, wiederhergestellt werden.

Gemäß weiteren vorteilhaften Ausgestaltungen kann das Hostsystem wenigstens mit einer ersten und einer zweiten Geschwindigkeit Daten über den Datenbus übertragen. Der Verbindungszustand des Peripheriegerätes legt fest, ob das Peripheriegerät für eine Datenübertragung mit der ersten oder der zweiten Geschwindigkeit eingerichtet ist. Der Datenbus umfasst wenigstens eine erste Datenleitung und eine zweite Datenleitung und die Halteschaltung ist dazu eingerichtet, die erste Datenleitung auf einen vorbestimmten Spannungspegel zu halten, wenn das Peripheriegerät für eine Datenübertragung mit der ersten Geschwindigkeit eingerichtet ist und die zweite Datenleitung auf einen vorbestimmten Spannungspegel zu halten, wenn das Peripheriegerät für eine Datenübertragung mit der zweiten Geschwindigkeit eingerichtet ist. Eine derartige Ausgestaltung der Energiesparschaltung ermöglicht es, das Peripheriegerät nach einer Trennung von einer Versorgungsspannung wieder erfolgreich mit dem Datenbus zu verbinden und mit einer zuvor ermittelten Geschwindigkeit Daten mit dem Hostsystem auszutauschen, ohne dass es einer erneuten Initialisierung des Peripheriegerätes oder des Hostsystems bedarf.

Die erfindungsgemäße Energiesparschaltung eignet sich insbesondere zum Einbau in ein Peripheriegerät gemäß Patentanspruch 12 oder ein Vermittlungsgerät für einen Datenbus gemäß Patentanspruch 13.

Die oben genannte Aufgabe wird ebenso durch ein Arbeitsverfahren für eine zwischen einem Hostsystem und einem Peripheriegerät angeordnete Energiesparschaltung mit den folgenden Schritten gelöst:
- Ermitteln eines Verbindungszustands des Peripheriegerätes;
- Erkennen eines Leerlaufzustands des Datenbusses durch Überwachen des Datenbusses;
- Halten des Verbindungszustands des Peripheriegerätes durch Bereitstellen eines Steuersignals für das Hostsystem; und
- Auftrennen einer dem Peripheriegerät zugeordneten Stromversorgungsleitung durch Öffnen wenigstens eines Schaltelementes.

Weitere vorteilhafte Ausgestaltungen der Erfindung sind in den Unteransprüchen sowie der nachfolgenden, ausführlichen Beschreibung offenbart.

Die Erfindung wird anhand unterschiedlicher Ausführungsbeispiele unter Bezugnahme auf Figuren näher erläutert. In den Figuren zeigen:
Figur 1 eine erste Anordnung umfassend ein Peripheriegerät, eine Energiesparschaltung und ein Hostsystem,
Figur 2 eine schematische Darstellung einer ersten Energiesparschaltung für die Anordnung gemäß Figur 1,
Figur 3 eine zweite Anordnung umfassend ein Peripheriegerät, eine Energiesparschaltung und ein Hostsystem,
Figur 4 eine schematische Darstellung einer zweiten Energiesparschaltung für die zweite Anordnung gemäß Figur 3,
Figur 5 ein erstes Peripheriegerät mit einem externen Netzteil zur Stromversorgung,
Figur 6 ein zweites Peripheriegerät mit einer integrierten Stromversorgungseinheit,
Figur 7 eine schematische Darstellung eines Vermittlungsgerätes mit einer integrierten Energiesparschaltung,
Figur 8 eine schematische Darstellung von Bussignalen, und
Figur 9 ein Ablaufdiagramm eines Arbeitsverfahrens für eine Energiesparschaltung.

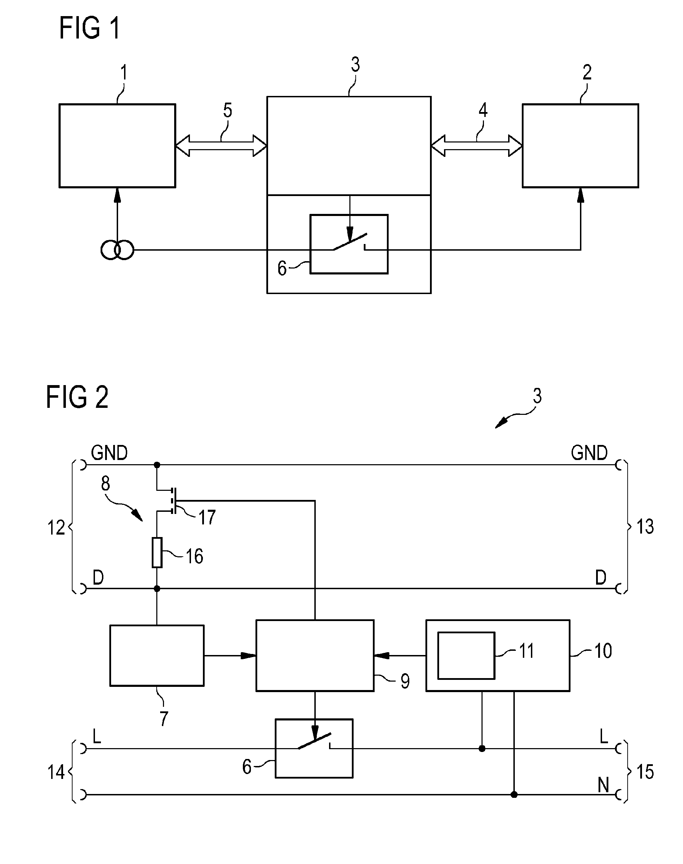

Figur 1 zeigt eine erste Anordnung umfassend ein Hostsystem 1, ein Peripheriegerät 2 sowie eine zwischen das Hostsystem 1 und das Peripheriegerät 2 geschaltete Energiesparschaltung 3.

Im Ausführungsbeispiel handelt es sich bei dem Hostsystem 1 beispielsweise um einen Desktop-PC. Bei dem Peripheriegerät 2 handelt es sich im Ausführungsbeispiel um einen Drucker, der mittels eines seriellen Datenbusses mit einem Hostadapter des Hostsystems 1 verbunden ist. Im Ausführungsbeispiel ist das Peripheriegerät 2 mit einem ersten Datenkabel 4 mit der Energiesparschaltung 3 verbunden. Die Energiesparschaltung 3 ist mit einem zweiten Datenkabel 5 mit dem Hostsystem 1 verbunden. Somit ist die Energiesparschaltung 3 elektrisch zwischen das Hostsystem 1 und das Peripheriegerät 2 geschaltet und kann eine Kommunikation über den Datenbus überwachen.

Die Energiesparschaltung 3 umfasst ein erstes Schaltelement 6 in Form eines Relais. Das erste Schaltelement 6 ist zwischen einem Stromversorgungsnetz, das eine Netzwechselspannung bereitstellt, und dem Peripheriegerät 2 angeordnet. Durch Öffnen des ersten Schaltelementes 6 kann die Energiesparschaltung 3 das Peripheriegerät 2 vollständig von dem Stromversorgungsnetz trennen.

Figur 2 zeigt eine schematische Darstellung der Energiesparschaltung 3. Die Energiesparschaltung 3 umfasst neben dem ersten Schaltelement 6 zum Auftrennen einer Phasenleitung L eine Überwachungsschaltung 7 und eine Halteschaltung 8. Darüber hinaus umfasst die Energiesparschaltung 3 eine Steuerschaltung 9, die die Überwachungsschaltung 7, die Halteschaltung 8 und das erste Schaltelement 6 ansteuert. Im dargestellten Ausführungsbeispiel umfasst die Energiesparschaltung 6 des Weiteren einen Schaltwandler 10 sowie einen Energiespeicher 11.

Wie aus der Figur 2 ersichtlich, sind eine Datenleitung D sowie eine Referenzleitung GND des Datenbusses durch die Energiesparschaltung 3 geschleift. Somit stehen Signale, die an einem ersten Anschluss 12 der deaktivierten Energiesparschaltung 3 eingehen, auch an dem zweiten Anschluss 13, an dem das Peripheriegerät 2 angeschlossen ist, zur Verfügung. Ein primärseitiger Netzanschluss 14 zum Anschluss der Energiesparschaltung 3 an ein Stromversorgungsnetz wird über das erste Schaltelement 6 mit einem Schaltausgang 15 der Energiesparschaltung 3 verbunden. An den Schaltausgang 15 wird ein Netzteil des Peripheriegeräts 2 angeschlossen.

Die Überwachungsschaltung 7 ist dazu eingerichtet, eine Signalisierung auf der Datenleitung D des Datenbusses zu überwachen. Die Überwachungsschaltung 7 erkennt, ob Daten zwischen dem Peripheriegerät 2 und dem Hostsystem 1 ausgetauscht werden oder ob das Bussystem sich in einem Leerlaufzustand befindet, in dem entweder gar keine Daten oder ein vorbestimmtes Steuersignal, das den Leerlaufzustand anzeigt, übertragen werden. Wird das Vorliegen eines solchen Leerlaufzustandes durch die Überwachungsschaltung 7 erkannt, erzeugt sie ein entsprechendes Steuersignal für die Steuerschaltung 9.

Die Steuerschaltung 9 erkennt das von der Überwachungsschaltung 7 gelieferte Steuersignal und veranlasst eine Trennung des Peripheriegerätes 2 von dem Bussystem ohne das Hostsystem 1 zu stören. Hierzu wird im Ausführungsbeispiel zunächst die Datenleitung D über einen so genannten Pull-Down-Widerstand 16 und einen Transistor 17 mit der Referenzleitung GND verbunden. Beispielsweise wird die Datenleitung D über den Pull-Down-Widerstand 16 auf ein Massepotenzial der Referenzleitung GND gezogen.

Im Ausführungsbeispiel ersetzt der Pull-Down-Widerstand 16 eine Terminierung des Datenbusses durch das Peripheriegerät 2. Die Steuerschaltung 9 zieht bei Erkennen eines Leerlaufzustands des Bussystems über die Überwachungsschaltung 7 daher zunächst die Datenleitung D auf das Potenzial der Referenzleitung GND und öffnet dann das erste Schaltelement 6, so dass das Peripheriegerät 2 von dem Stromversorgungsnetz getrennt wird und während des Leerlaufzustandes des Bussystems keine weitere Energie aus dem Stromversorgungsnetz aufnimmt.

Am Ende des Leerlaufzustandes aktiviert die Steuerschaltung 9 das Peripheriegerät 2 erneut in einer Weise, die für das Hostsystem 1 transparent ist. Im Ausführungsbeispiel aktiviert die Steuerschaltung 9 hierfür zunächst das Peripheriegerät 2 durch Schließen des ersten Schaltelementes 6. Während einer vorbestimmten Vorlaufzeit, die das Peripheriegerät 2 benötigt, um wieder in einen normalen Betriebszustand zu gelangen, wird der Transistor 17 weiterhin durch die Steuerschaltung 9 angesteuert. Ist das Peripheriegerät 2 wieder vollständig betriebsbereit, wird das Steuersignal für den Transistor 17 durch die Steuerschaltung 9 unterbrochen und somit die Datenleitung D von der Referenzleitung GND getrennt. Anschließend findet wieder eine ungestörte Kommunikation zwischen dem Peripheriegerät 2 und dem Hostsystem 1 über die Datenleitung D statt.

Der Datenbus gemäß Figur 2 umfasst im Ausführungsbeispiel keine Leitung zum Bereitstellen einer Versorgungsspannung. Um die Steuerschaltung 9 sowie die daran angeschlossene Halteschaltung 8 und Überwachungsschaltung 7 mit einer Betriebsenergie zu versorgen, umfasst die Energiesparschaltung 3 den zusätzlichen Schaltwandler 10, der aus einer netzseitigen Wechselspannung eine Gleichspannung zur Versorgung der Komponenten der Energiesparschaltung 3 erzeugt. Um auch die Energieaufnahme der Energiesparschaltung 3 selbst zu optimieren, ist der Schaltwandler 10 im Ausführungsbeispiel hinter dem ersten Schaltelement 6 angeordnet. Somit wird auch der Schaltwandler 10 in dem Leerlaufzustand des Bussystems von dem Stromversorgungsnetzwerk getrennt. Um die Funktion der Steuerschaltung 9 weiterhin sicherzustellen, speichert der Energiespeicher 11, beispielsweise eine wiederaufladbare Batterie oder ein Kondensator mit einer hohen Speicherkapazität, ausreichend elektrische Energie um die Steuerschaltung 9 für einen vorbestimmten Bereitschaftszeitraum, beispielsweise eine Stunde nach Aktivierung des Leerlaufzustands, mit einer Betriebsenergie zu versorgen.

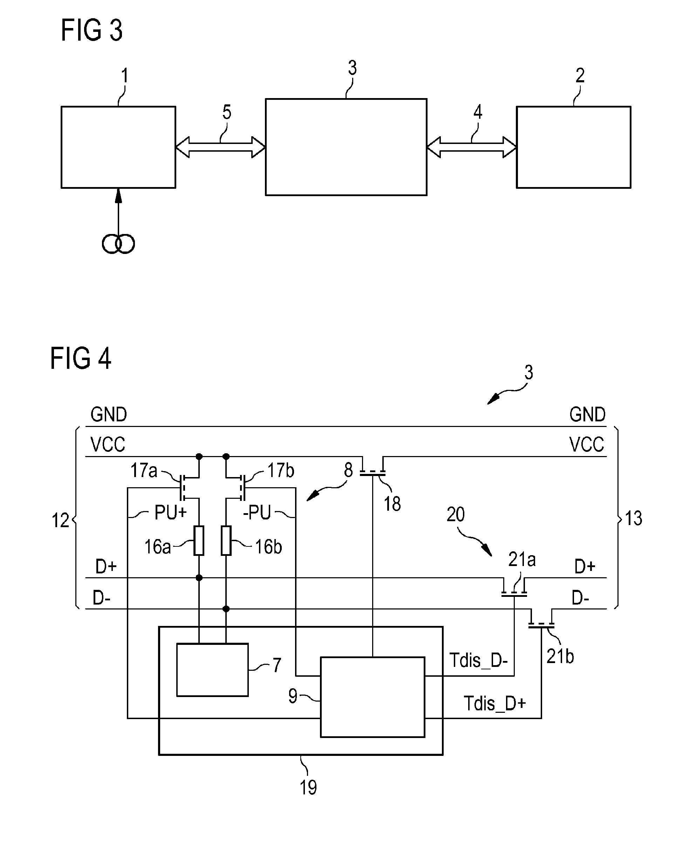

Figur 3 zeigt eine alternative Anordnung umfassend ein Hostsystem 1, ein Peripheriegerät 2 und eine Energiesparschaltung 3. Im Ausführungsbeispiel sind das Hostsystem 1 und das Peripheriegerät 2 wiederum über einen seriellen Datenbus, hier einen USB-Bus mit einer integrierten Spannungsversorgungsleitung, verbunden. Das Peripheriegerät 2 wird über den USB-Bus mit einer Betriebsspannung versorgt. In der Anordnung gemäß Figur 3 ist daher ausschließlich das Hostsystem 1 mit einem Stromversorgungsnetzwerk verbunden.

Figur 4 zeigt eine schematische Darstellung des Aufbaus der Energiesparschaltung 3 für das USB-Bussystem gemäß Figur 3. Sowohl ein erster Anschluss 12 als auch ein zweiter Anschluss 13 der Energiesparschaltung 3 umfassen jeweils zwei differenzielle Datenleitungen D+ und D- sowie zwei Versorgungsleitungen VCC und GND. Diese Leitungen sind durch die Energiesparschaltung 3 durchgeschleift, wobei die Versorgungsleitung VCC mittels eines zweiten Schaltelementes 18 aufgetrennt werden kann. Im Ausführungsbeispiel handelt es sich bei dem zweiten Schaltelement 18 um einen Feldeffekttransistor.

Auch die Energiesparschaltung nach Figur 4 weist eine Überwachungsschaltung 7, eine Steuerschaltung 9 sowie eine Halteschaltung 8 auf. Im Ausführungsbeispiel sind die Überwachungsschaltung 7 und die Steuerschaltung 9 in einem gemeinsamen Mikrocontroller 19 integriert. Selbstverständlich ist auch eine diskrete Ausgestaltung der Überwachungsschaltung 7 und der Steuerschaltung 9 möglich. Die Halteschaltung 8 umfasst einen ersten Transistor 17a sowie einen zweiten Transistor 17b zum Verbinden der ersten Datenleitung D+ über einen ersten Widerstand 16a mit der Versorgungsleitung VCC beziehungsweise der zweiten Datenleitung D- mit über einen zweiten Widerstand 16b mit der Versorgungsleitung VCC.

Die Energiesparschaltung 3 weist eine optionale Unterbrechungsschaltung 20 auf. Die Unterbrechungsschaltung 20 umfasst zwei dritte Schaltelemente 21a und 21b, durch die die Datenleitungen D+ und D- zwischen dem ersten Anschluss 12 und dem zweiten Anschluss 13 aufgetrennt werden können. Dadurch können Leckströme in Richtung eines an den zweiten Anschluss 13 angeschlossenen Peripheriegeräts 2 verhindert werden. Durch ein Auftrennen der Datenleitungen D+ und D- durch die Unterbrechungsschaltung 20 kann außerdem eine Datenübertragung zwischen dem Peripheriegerät 2 und dem Hostsystem 1 auch dann unterbunden werden, wenn das Peripheriegerät 2 über eine externe Stromversorgungseinheit mit einer Betriebsspannung versorgt wird. Auf diese Weise kann insbesondere ein Aufwecken des Hostsystems 1 durch das Peripheriegerät 2 vermieden werden.

Im Ausführungsbeispiel gemäß Figur 4 wird der Mikrocontroller 19 über die Stromversorgungsleitungen VCC und GND mit einer Betriebsspannung versorgt. Dies ist aus Gründen der Übersichtlichkeit in der Figur 4 jedoch nicht dargestellt. Gemäß der USB-Spezifikation, darf ein so genanntes Full Power oder Low Power Peripheriegerät im so genannten Suspend-Zustand 500 pA bzw. 2.5 mA Strom über die Versorgungsleitung entnehmen. Dies reicht zum Betrieb des Mikrocontrollers 19 gemäß dem Ausführungsbeispiel aus.

Im Betrieb der Energiesparschaltung 3 überwacht die Überwachungsschaltung 7 den Datenbus umfassend die Datenleitungen D+ und D-. Zusätzlich zur Überwachung einer Signalisierung des Beginns beziehungsweise des Endes eines Leerlaufzustands des Datenbusses überwacht die Überwachungsschaltung 7 auch eine Betriebsart eines an den zweiten Anschluss 13 angeschlossenen Peripheriegerätes 2.

Nach einer Initialisierungsphase, der so genannten USB Device Enumeration, wird im Normalbetriebszustand des Hostsystems 1, beispielsweise dem ACPI-Zustand S0 des Betriebssystem, ein Leerlaufzustand auf dem USB Bus eingeleitet, falls das USB Peripheriegerät 2 nicht genutzt wird. Damit wird das Peripheriegerät 2 in den so genannten Suspend-Zustand versetzt. Dies kann auch durch einen globalen oder selektiven Suspend-Befehl des Hostsystems 1 erreicht werden. Beim Wechsel des Hostsystems 1 in einen Energiesparzustand, beispielsweise einen der ACPI-Zusände S3, S4 oder S5, wird vom Hostsystem 1 im Ausführungsbeispiel ebenfalls ein Suspend-Befehl gesendet.

Sobald das Hostsystem 1 dem Peripheriegerät 2 einen Leerlaufzustand signalisiert, muss dieses innerhalb von 3 ms einen Suspend-Zustand einleiten. Jedes USB Peripheriegerät 2 muss auf USB-Befehle vom Hostsystem 1 sofort reagieren, unabhängig davon, ob es sich um einen globalen Suspend- oder selektiven Suspend-Befehl oder um die Signalisierung eines Leerlaufzustands (Idle State) handelt. Durch optimierte Treiber und Software, die auf dem Hostsystem 1 laufen, kann die Nutzung dieser Energiesparmodi verbessert werden.

Abhängig davon, ob es sich bei dem USB Peripheriegerät 2 um ein Low-Speed- (LS), Full-Speed- (FS) oder High-Speed-Gerät (HS) handelt, werden in der Regel so genannte Keep-alive-Signale über den USB Bus geschickt. In jedem 125 µs langen µ-Frame in der High-Speed-Betriebsart oder jedem 1 ms langen Frame in der Low- oder Full-Speed-Betriebsart wird dann nur noch ein SOF (Start of Frame) Token geschickt, das den Eintritt in den Suspend-Zustand verhindert. Auch jede andere USB-Bus Aktivität verhindert automatisch den Eintritt in den Suspend Mode.

USB Peripheriegeräte 2 müssen bei Erkennung vom konstanten Leerlaufzustand vom so genannten Upstream-Port, also dem Hostsystem 1 oder einem übergeordneten USB-Hub, innerhalb von 3 ms in den Suspend-Zustand übergehen. Nach weiteren 10 ms darf das Peripheriegerät 2 nur noch den um Standard festgelegten Suspend-Strom vom USB-Bus aufnehmen. Im Suspend-Zustand muss das Peripheriegerät 2 in der High- oder Full-Speed-Betriebsart eine Spannung über die Datenleitung D+ und in der Low-Speed-Betriebsart über die Datenleitung D- weiterhin zur Verfügung stellen, damit der Leerlaufzustand aufrechterhalten werden kann. Hierzu wird die Versorgungsleitung VCC über einen so genannten Pull-Up-Widerstand mit der entsprechenden Datenleitung D+ bzw. D- verbunden. Dies sichert zusammen mit dem Upstream Hostsystem 1 oder USB-Hub die korrekte Einhaltung der USB Spezifikation.

Für den Suspend von High-Speed-Peripheriegeräten 2 gibt es zusätzliche Anforderungen, da sich ein Zurücksetzen (Reset) und eine Leerlaufzustand (Idle) für High-Speed-Peripheriegeräte 2 nicht eindeutig unterscheiden lassen. High-Speed-Peripheriegeräte müssen daher nach 3 ms Leerlauf, spätestens nach 3,125 ms, von der High-Speed-Betriebsart in die Full-Speed-Betriebsart wechseln. Hierzu wird eine Empfangsschaltung von den differenziellen Datenleitung D+ und D-getrennt und die Datenleitung D+ über einen Pull-Up-Widerstand des Peripheriegeräts 2 mit der Versorgungsleitung VCC verbunden. Das Peripheriegerät 2 muss frühestens 100 µs und spätestens 875 µs nach dem Wechsel in die Full-Speed-Betriebsart die Leitungen D+ und D- überwachen. Falls die Leitung ein FS J signalisiert, also einen hohen logischen Pegel von mehr als 200 mV auf der Datenleitung D+ und einen niedrigen logischen Pegel auf der Datenleitung D-, dann bleibt das Peripheriegerät 2 im Suspend-Zustand. Falls jedoch ein SEO Start of Packet, also einem Übergang im Idle in den so genannten K State erkannt wird, dann handelt es sich um ein Reset-Signal zum Zurücksetzen des Peripheriegeräts 2, das dann auch ausgelöst wird.

Wie oben beschrieben zeigen USB-Geräte durch ein Heraufziehen der Datenleitungen D+ beziehungsweise D- in einem Leerlaufzustand an, ob sie in der High- bzw. Full-Speed-Betriebsart oder Low-Speed-Betriebsart arbeiten. Vor der Abschaltung des Peripheriegerätes 2 wird der aktuelle Buszustand erkannt und durch die Zuschaltung des entsprechenden Pull-Up-Widerstands 16a oder 16b der Halteschaltung 8 nachgebildet. Hierzu aktiviert die Steuerschaltung 9 bei Erkennung eines Leerlaufzustandes über die Überwachungsschaltung 7 entweder den ersten Transistor 17a zur Signalisierung eines Gerätes mit einer Full-Speed-Betriebsart oder den zweiten Transistor 17b zur Signalisierung eines Gerätes mit einer Low-Speed-Betriebsart. Dadurch wird verhindert, dass von dem Hostsystem 1 beim Abschalten des Peripheriegeräts 2 eine Bustrennung und beim Wiedereinschalten eine erneute Verbindung mit dem Bussystem erkannt wird, die dem Betriebssystem des Hostsystems 1 sonst signalisiert würde.

Sobald sich das Peripheriegerät 2 im Suspend-Zustand befindet, reagiert die Energiesparschaltung 3 und steuert dann das zweite Schaltelement 18 derart an, dass die Stromversorgung des Peripheriegeräts 2 unterbrochen wird. Durch die Trennung der Versorgungsleitung VCC können auch busgespeiste Peripheriegeräte 2 von der Versorgungsspannung abgetrennt werden, ohne dass ein an den ersten Anschluss 12 angeschlossenes Hostsystem 1 die Deaktivierung des Peripheriegerätes 2 bemerkt. Optional werden zusätzlich die Datenleitungen D+ und D- über die Unterbrechungsschaltung 20 aufgetrennt.

Damit ein Peripheriegerät 2 aus dem Suspend-Zustand zurückkehrt, muss es über eine so genannte Resume-Sequenz geweckt werden. Ein Peripheriegerät 2 beginnt den Resume, sobald ein anderer Buszustand (englisch: non-Idle State) als der Leerlaufzustand (englisch: Idle State) auf dem Upstream- Port anliegt. So genannte Wakeup-fähige USB-Periepheriegeräte 2 können auch das Hostsystem 1 aus dem Suspend-Zustand wecken.

Das Hostsystem 1 ist jederzeit berechtigt, die Resume-Sequenz (TDRSMDN), die für mindestens 20ms an dem Bus anliegt, zu schicken. Abhängig von der Gerätegeschwindigkeit muss das Hostsystem die Resume-Sequenz durch zwei unterschiedliche Endsequenzen beenden. Für Full- und Low-Speed-Peripheriegeräte 2 wird ein Low-Speed-EOP (End-of-Packet: zwei low-speed Bit-Zeiträume von single ended SEO, gefolgt von einem J State) signalisiert. Falls das Peripheriegerät sich in der High-Speed-Betriebsart befunden hat, als es in den Suspend-Zustand versetzt wurde, muss die Resume-Signalisierung mit einer High-Speed Idle-Sequenz eingeleitet werden. Die Steuerung des Hostsystems 1 muss zusätzlich eine 10 ms lange Resume-Recovery-Zeit (TRSMRCY) gewährleisten, bevor auf die aufzuweckenden Peripheriegeräte 2 zugegriffen werden darf.

Sobald das Hostsystem 1 den Resume-Zustand durch eine Pegeländerung auf den Datenleitungen D+ und D- einleitet, wird dies von der Überwachungsschaltung 7 erfasst und durch die Steuerschaltung 8 ausgewertet. Dann wird die Versorgungsspannung über das zweite Schaltelement 18 wieder auf den zweiten Anschluss 13 durchgeschaltet, und die Pull-Up-Widerstände 16a und 16b werden von den Datenleitungen D+ und D- getrennt. Auch die optionale Unterbrechungsschaltung 20 wird dann gegebenenfalls deaktiviert, um eine Verbindung der Datenleitungen zwischen dem ersten Anschluss 12 und dem zweiten Anschluss 13 wiederherzustellen. Dies erfolgt im Ausführungsbeispiel synchron zur Deaktivierung der Transistoren 17a und 17b, damit eine unterbrechungsfreie Übernahme durch einen geräteinternen Pull-Up-Widerstand stattfindet und somit keine Gerätetrennung ausgelöst wird. Danach kehrt das Peripheriegerät 2 aus dem Suspend-Zustand unter Berücksichtigung der Zeitanforderungen der USB-Spezifikation wieder in den normalen Betriebszustand zurück.

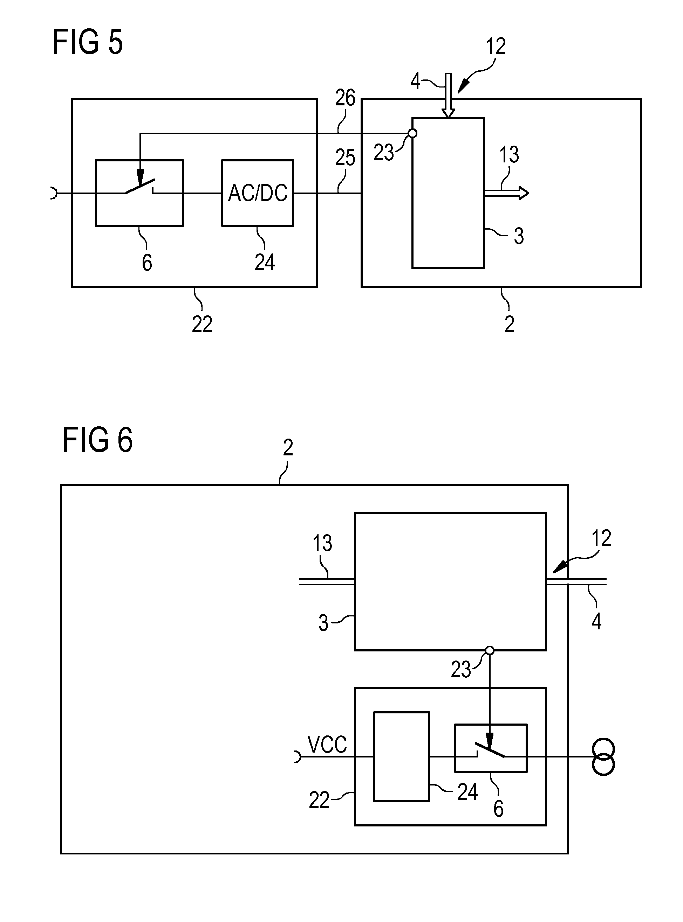

Figur 5 zeigt ein Peripheriegerät 2 mit einem externen Netzteil 22. Das Peripheriegerät 2 gemäß Figur 5 umfasst eine Energiesparschaltung 3. Die Energiesparschaltung 3 ist ähnlich wie die in der Figur 2 dargestellte Energiesparschaltung 3 aufgebaut und stellt ein Steuersignal über einen Steuersignalausgang 23 an das Peripheriegerät 2 bereit. Das Steuersignal von dem Steuerausgang 23 dient zum Unterbrechen einer Stromzufuhr zu dem externen Netzteil 22. Hierzu umfasst das Netzteil 22 ein erstes Schaltelement 6 zum Trennen einer Wandlerschaltung 24 von einem Stromversorgungsnetzwerk. Das Netzteil 22 und das Peripheriegerät 2 sind über eine Versorgungsleitung 25 zum Übertragen einer Gleichspannung miteinander verbunden. Darüber hinaus sind sie im Ausführungsbeispiel durch eine zusätzliche Steuerleitung 26 zum Übertragen des Steuersignals von dem Steuerausgang 23 zu dem ersten Schaltelement 6 des Netzteils 22 miteinander verbunden.

Alternativ kann das Steuersignal des Steuerausgangs 23 auch auf die Versorgungsleitung 25 zum Übertragen der Versorgungsspannung aufmoduliert werden. Beispielsweise kann ein hochfrequentes Wechselspannungssignal auf eine Versorgungsgleichspannung aufmoduliert werden.

Figur 6 zeigt ein Peripheriegerät 2 mit einem internen Netzteil 22. Die Funktionsweise des Peripheriegerätes 2 gemäß Figur 6 entspricht weitgehend dem des Peripheriegerätes 2 in Figur 5. Da das Netzteil 22 gemäß Figur 6 jedoch in das Peripheriegerät 2 integriert ist, kann auf eine externe Verbindung zwischen dem Peripheriegerät 2 und dem Netzteil 22 verzichtet werden, was insbesondere die Ansteuerung des ersten Schaltelementes 6 des Netzteils 22 erleichtert.

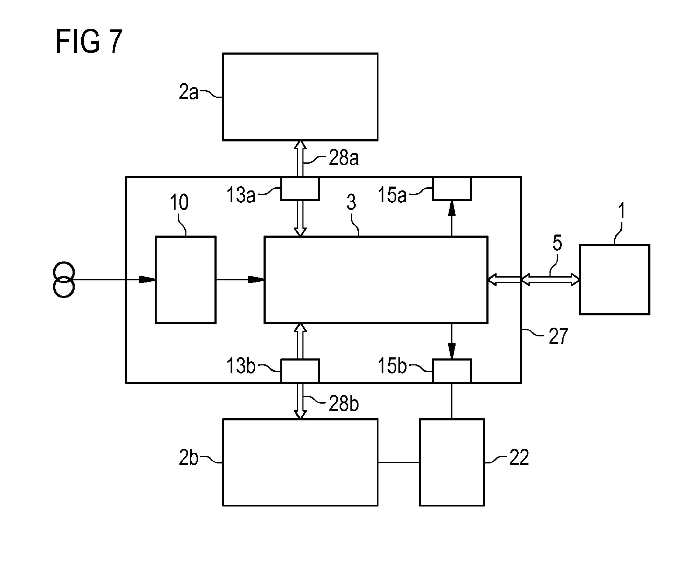

Figur 7 zeigt ein Vermittlungsgerät 27 zum Anschluss von zwei Peripheriegeräten 2a und 2b an ein gemeinsames Hostsystem 1. Das erste Peripheriegerät 2a wird über einen Datenbus von dem Vermittlungsgerät 27 mit einer Betriebsenergie ferngespeist. Hierzu ist das erste Peripheriegerät 2a mit einer Busleitung 28a, die sowohl Datenleitungen als auch Versorgungsleitungen umfasst, mit dem Vermittlungsgerät 27 verbunden. Das zweite Peripheriegerät 2b wird durch ein externes Netzteil 22 mit einer Betriebsenergie versorgt. Das zweite Peripheriegerät 2b ist über eine zweite Busleitung 28b mit dem Vermittlungsgerät 27 verbunden. Darüber hinaus ist das Netzteil 22 an einen Schaltausgang 15b des Vermittlungsgerätes 27 angeschlossen. Beispielsweise handelt es sich um eine schaltbare Steckdose, die einem zweiten Anschluss 13b für das zweite Peripheriegerät 2b zugeordnet ist.

Das Vermittlungsgerät 27 umfasst eine Energiesparschaltung 3, die ähnlich aufgebaut ist wie die zuvor beschriebenen. Insbesondere überwacht die Energiesparschaltung 3 die Kommunikation zwischen dem Hostsystem 1 und den Peripheriegeräten 2a und 2b. Werden keine Daten von dem Hostsystem 1 an die Peripheriegeräte 2a oder 2b übertragen, wird das erste Peripheriegerät 2a beziehungsweise das zweite Peripheriegerät 2b von einer Energieversorgung getrennt. Im Falle des über das Vermittlungsgerät 27 versorgten Peripheriegeräts 2a wird hierzu lediglich eine Versorgungsleitung der Busleitung 28a unterbrochen, wie dies beispielsweise unter Bezugnahme auf die Figur 4 beschrieben wurde. Im Fall des zweiten Peripheriegerätes 2b wird der als Steckdose ausgestaltete Schaltausgang 15b des Vermittlungsgerätes 27 deaktiviert, so dass das Netzteil 22 von dem Stromversorgungsnetzwerk getrennt wird.

Sind sämtliche an das Vermittlungsgerät 27 angeschlossene Peripheriegeräte 2 von dem Stromversorgungsnetzwerk getrennt, kann auch ein Schaltwandler 10 des Vermittlungsgerätes 27 von dem Energieversorgungsnetz getrennt werden. In diesem Fall wird die Energiesparschaltung 3 wie oben beschrieben entweder von dem Hostsystem 1 oder aus einem internen Energiespeicher des Vermittlungsgerätes 27 mit einer Betriebsenergie versorgt.

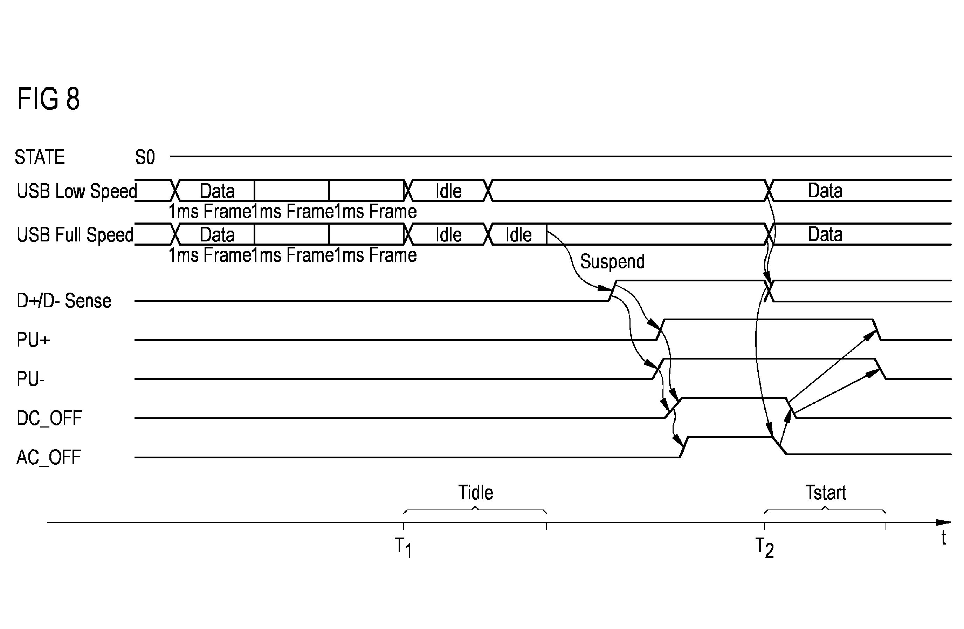

Figur 8 zeigt eine beispielhafte Signalisierung eines Leerlaufzustands über einen USB-Bus. Ein Hostsystem 1, im Ausführungsbeispiel ein Personalcomputer, befindet sich in einem normalen Betriebszustand, beispielsweise dem so genannten ACPI-Betriebszustand S0. Zunächst findet eine Datenübertragung über differenzielle Datenleitungen D+ und D- eines USB-Busses statt. Solange Daten mit einem Peripheriegerät 2 ausgetauscht werden, werden hierzu Datenpakete mit einer Rahmendauer von einer Millisekunde entweder gemäß dem USB-Low-Speed-Standard oder gemäß dem USB-Full-Speed-Standard über die Datenleitungen D+ und D- gesendet.

Sollen keine weiteren Daten mehr zwischen dem Hostsystem 1 und dem Peripheriegerät 2 ausgetauscht werden, signalisiert das Hostsystem 1 zu einem Zeitpunkt T1 einen Leerlaufzustand. In diesem Zustand werden weder Daten noch Steuersignale über die Datenleitungen D+ und D- ausgetauscht. Insbesondere werden in diesem Busbetriebszustand nicht einmal so genannte Start-Off-Frame (SOF) Pakete über den Datenbus geschickt.

Nach einer vorbestimmten Leerlaufzeit Tidle von wenigstens drei Millisekunden erkennt die Energiesparschaltung 3, dass keine Aktivität auf dem Datenbus mehr stattfindet. Daraufhin zieht sie in Abhängigkeit eines zuvor bestimmten Übertragungsmodus entweder die positive Datenleitung D+ oder die negative Datenleitung D- auf einen vorbestimmten Spannungspegel. Danach wird ein entsprechendes Steuersignal zum Unterbrechen einer primären Netzspannung und/oder einer sekundären Gleichspannung einer Versorgungsleitung des Datenbusses erzeugt. Auf diese Weise wird sichergestellt, dass das Peripheriegerät 2 in dem Leerlaufzustand des Bussystems keine weitere Energie mehr aufnimmt.

Wird zu einem späteren Zeitpunkt T2 erkannt, dass eine Kommunikation über den Datenbus von Seiten des Hostsystems 1 fortgesetzt werden soll, wird das Peripheriegerät 2 wieder mit dem Datenbus verbunden. Hierzu erkennt die Energiesparschaltung 3 zunächst eine Wiederaufnahme der Signalisierung über den Datenbus. Beispielsweise wird ein explizites Resume-Signal von dem Hostsystem 1 bereitgestellt. Alternativ ist auch eine Erkennung von Datenpaketen mit vorangestelltem SOF-Signal möglich. Daraufhin aktiviert die Steuerschaltung 9 zunächst das erste Schaltelement 6 und/oder das zweite Schaltelement 18 zum Bereitstellen einer Netzspannung an ein Netzteil 22 beziehungsweise einer Versorgungsspannung über eine Versorgungsleitung des Datenbusses. Das Peripheriegerät 2 läuft an und befindet sich innerhalb einer vordefinierten Zeitspanne Tstart wieder in einem betriebsbereiten Zustand. Daraufhin wird die Halteschaltung 8 durch Zurücknehmen der entsprechenden Steuersignale zum Hochziehen der positiven Datenleitung D+ beziehungsweise der negativen Datenleitung D-deaktiviert.

Nachfolgend werden die Daten von dem Peripheriegerät 2 verarbeitet und eine Kommunikation mit dem Hostsystem 1 fortgesetzt. Hierbei findet insbesondere keine erneute Geräteerkennung beziehungsweise eine Erkennung einer Trennung und eines Wiederverbindens des Peripheriegerätes 2 mit dem Hostsystem 1 statt. Dementsprechend erzeugt das Hostsystem 1 keinen entsprechenden Interrupt, der von einem Betriebssystem des Hostsystems 1 beim Anschluss weiterer Peripheriegeräte 2 normalerweise ausgewertet wird.

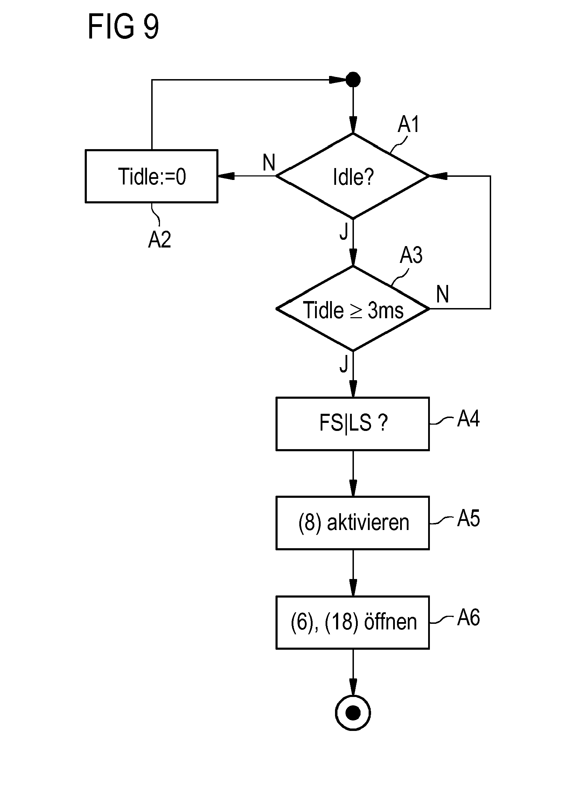

Figur 9 zeigt ein Ablaufdiagramm eines Arbeitsverfahrens für eine Energiesparschaltung 3.

In einem ersten Schritt A1 wird in einer Schleife überwacht, ob sich das Bussystem in einem Leerlaufzustand befindet. Befindet sich das Bussystem nicht in einem Leerlaufzustand, wird ein Timer zu Bestimmung einer Leerlaufzeit in einem Schritt A2 zurückgesetzt. Die Schritte A1 und A2 werden solange wiederholt, bis ein Leerlaufzustand erkannt wird.

Befindet sich das Bussystem in einem Leerlaufzustand wird in einem nachfolgenden Schritt A3 überprüft, ob eine vorgegebene Zeitspanne für das Anliegen des Leerlaufzustands erreicht wurde. Beispielsweise wird überprüft, ob sich ein USB-Bus für mehr als drei Millisekunden in einem Leerlaufzustand befindet. Ist dies noch nicht der Fall, wird das Verfahren im Schritt A1 fortgesetzt.

Ist die vorgegebene Leerlaufzeit erreicht wird in einem Schritt A4 ein Verbindungszustand eines Peripheriegerätes 2 erkannt. Beispielsweise wird erkannt, ob ein Peripheriegerät 2 in einer so genannten Low-Speed- oder in einer Full-Speed-Betriebsart mit einem Hostsystem 1 kommuniziert. Eine gesonderte Überwachung auf die Verwendung einer High-Speed-Betriebsart ist nicht erforderlich, weil Peripheriegeräte, die in der High-Speed-Betriebsart kommunizieren vor dem Übergang in einen Leerlaufzustand zunächst in die Full-Speed-Betriebsart zurückwechseln.

In einem Schritt A5 wird dann zunächst eine Halteschaltung 8 aktiviert. Beispielsweise wird über einem Transistor 17 ein Widerstand 16 zwischen eine Datenleitung und eine Versorgungsleitung geschaltet, um die Datenleitung auf einem vorbestimmten Spannungspegel zu ziehen.

In einem nachfolgenden Schritt A6 wird ein Schaltelement 6 und/oder ein zweites Schaltelement 18 geöffnet, um eine Stromversorgung des Peripheriegerätes 2 zu unterbinden. Das Peripheriegerät 2 nimmt daher keine weitere elektrische Energie aus einem Stromversorgungsnetzwerk mehr auf.

Die beschriebenen Merkmale der einzelnen, oben beschriebenen Ausgestaltungen können in vielfältiger Weise miteinander kombiniert werden. Dabei eignet sich die erfindungsgemäße Energiesparschaltung 3 zur Integration in einzelne Geräte, als separate, zwischen einem Hostsystem 1 und einem Peripheriegerät 2 angeordnete Zusatzschaltung sowie zur Anordnung in Vermittlungskomponenten wie einem USB-Hub oder -Switch.

Die beschriebene Lösung eignet sich neben dem USB-Bus auch für andere Bussysteme, die eine Erkennung eines Leerlaufzustands erlauben. Bevorzugt eignet sie sich für Bussysteme, die eine Versorgungsleitung umfassen, die eine Versorgung des Energiesparschaltung 3 über das Bussystem auch bei abgeschalteten Peripheriegeräten gestattet. Weitere Beispiele solcher Bussysteme sind eSATA, Firewire (IEEE 1394), external PCI-Express sowie Power over Ethernet (PoE, IEEE 802.3af).

Eine Energieeinsparung kann dadurch verbessert werden, dass eine hostseitige Ansteuerung des Bussystems weiter optimiert wird. Beispielsweise kann in einem Betriebssystem vorgegeben werden, ab welcher Zeitdauer der Inaktivität eines einzelnen Gerätes entweder das gesamte Bussystem oder einzelne Peripheriegeräte 2, die an das Bussystem angeschlossen sind, in einen Suspend-Zustand versetzt werden sollen. Bevorzugt wird das Hostsystem 1 so konfiguriert, dass es beim Schalten in einen Energiesparzustand, beispielsweise einen ACPI S3-, S4- oder S5-Zustand den Datenbus grundsätzlich in einen Leerlaufzustand versetzt, so dass an den Datenbus angeschlossene Peripheriegeräte 2 zusammen mit dem Hostsystem 1 in einen Energiesparzustand übergehen.

Die Signalisierung des Leerlaufzustands ist nicht an eine bestimmte Protokollschicht gebunden. Gemäß einer alternativen Ausgestaltung wird in einem Energiesparzustand des Hostsystems 1 auch eine Versorgungsleitung eines Datenbusses deaktiviert. Erkennt die Überwachungsschaltung 7 eine Deaktivierung einer Versorgungsspannung auf einer der Versorgungsleitungen kann dies ebenfalls zur Erkennung eines Leerlaufzustands und zur nachfolgenden Deaktivierung eines Peripheriegerätes 2 genutzt werden.

### Bezugszeichenliste

- 1: Hostsystem
- 2: Peripheriegerät
- 3: Energiesparschaltung
- 4: erstes Datenkabel
- 5: zweites Datenkabel
- 6: erstes Schaltelement
- 7: Überwachungsschaltung
- 8: Halteschaltung
- 9: Steuerschaltung
- 10: Schaltwandler
- 11: Energiespeicher
- 12: erster Anschluss
- 13: zweiter Anschluss
- 14: Netzanschluss
- 15: Schaltausgang
- 16: Widerstand
- 17: Transistor
- 18: zweites Schaltelement
- 19: Mikrocontroller
- 20: Unterbrechungsschaltung
- 21: drittes Schaltelement
- 22: Netzteil
- 23: Steuerausgang
- 24: Wandlerschaltung
- 25: Versorgungsleitung
- 26: Steuerleitung
- 27: Vermittlungsgerät
- 28: Busleitung

## Patentansprüche

1. Energiesparschaltung (3) für ein Peripheriegerät (2) zum Anschluss an einen Datenbus eines Hostsystems (1), umfassend:
- eine Überwachungsschaltung (7) zur Überwachung einer Kommunikation über den Datenbus;
- eine Halteschaltung (8) zum Halten eines Verbindungszustands des Peripheriegerätes (2);
- wenigstens ein Schaltelement (6, 18) zum Unterbrechen einer Versorgungsspannung für das Peripheriegerät (2); und
- eine Steuerschaltung (9), die dazu eingerichtet ist, einen Beginn eines Leerlaufzustands des Datenbusses durch die Überwachungsschaltung (7) zu erkennen, bei Erkennung eines Beginns des Leerlaufzustands den Verbindungszustand des Peripheriegerätes (2) durch Aktivieren der Halteschaltung (8) zu halten und eine Zufuhr der Versorgungsspannung für das Peripheriegerät (2) durch Öffnen des wenigstens einen Schaltelements (6, 18) zu unterbrechen.

2. Energiesparschaltung (3) nach Anspruch 1,
**dadurch gekennzeichnet, dass**
die Steuerschaltung (9) des Weiteren dazu eingerichtet ist, ein Ende eines Leerlaufzustands des Datenbusses durch die Überwachungsschaltung (7) zu erkennen, bei Erkennen eines Endes des Leerlaufzustandes die Zufuhr der Versorgungsspannung für das Periphergerät (2) durch Schließen des wenigstens einen Schaltelementes (6, 18) wiederherzustellen und den Verbindungszustand des Peripheriegerätes (2) durch Deaktivieren der Halteschaltung (8) freizugeben.

3. Energiesparschaltung (3) nach Anspruch 1 oder 2,
**dadurch gekennzeichnet, dass**
die Halteschaltung (8) eine Signalisierungskomponente zum Erzeugen wenigstens eines Steuersignals während des Leerlaufzustandes des Datenbusses umfasst.

4. Energiesparschaltung (3) nach Anspruch 3,
**dadurch gekennzeichnet, dass**
der Datenbus wenigstens eine Datenleitung (D+, D-) und wenigstens eine Referenzleitung (VCC, GND) zum Bereitstellen eines vorbestimmten Spannungsniveaus umfasst und die Signalisierungskomponente wenigstens einen Widerstand (16) umfasst und dazu eingerichtet ist, die wenigstens eine Datenleitung (D+, D-) über den Widerstand (16) mit der wenigstens einen Referenzleitung (VCC, GND) zu verbinden.

5. Energiesparschaltung (3) nach einem der Ansprüche 1 bis 4, **dadurch gekennzeichnet, dass**
das Hostsystem (1) wenigstens mit einer ersten und mit einer zweiten Geschwindigkeit Daten über den Datenbus übertragen kann und der Verbindungszustand des Peripheriegerätes (2) festlegt, ob das Peripheriegerät (2) für eine Datenübertragung mit der ersten oder der zweiten Geschwindigkeit eingerichtet ist.

6. Energiesparschaltung (3) nach Anspruch 5,
**dadurch gekennzeichnet, dass**
der Datenbus wenigstens eine erste Datenleitung (D+) und eine zweite Datenleitung (D-) umfasst und die Halteschaltung (8) dazu eingerichtet ist, die erste Datenleitung (D+) auf einem vorbestimmten Spannungspegel zu halten, wenn das Peripheriegerät für eine Datenübertragung mit der ersten Geschwindigkeit eingerichtet ist und die zweite Datenleitung (D-) auf einem vorbestimmten Spannungspegel zu halten, wenn das Peripheriegerät (2) für eine Datenübertragung mit der zweiten Geschwindigkeit eingerichtet ist.

7. Energiesparschaltung (3) nach einem der Ansprüche 1 bis 6, **dadurch gekennzeichnet, dass**
das Peripheriegerät (2) ein Netzteil (22) mit einer Wandlerschaltung (24) zum Bereitstellen einer sekundären Versorgungsspannung aus einer primären Versorgungsspannung eines Energieversorgungsnetzes aufweist und das wenigstens eine Schaltelement (6) zur Trennung der Wandlerschaltung (24) von dem Energieversorgungsnetz eingerichtet ist.

8. Energiesparschaltung (3) nach einem der Ansprüche 1 bis 7, **dadurch gekennzeichnet, dass**
der Datenbus wenigstens eine Versorgungsleitung (VCC, GND) zur Bereitstellung einer Versorgungsspannung an das Peripheriegerät (2) umfasst und das wenigstens eine Schaltelement (18) zur Trennung des Peripheriegerätes (2) von der wenigstens einen Versorgungsleitung (VCC, GND) des Datenbusses eingerichtet ist.

9. Energiesparschaltung (3) nach einem der Ansprüche 1 bis 8, **dadurch gekennzeichnet, dass**
die Energiesparschaltung (3) über die Versorgungsleitung (VCC, GND) des Datenbusses mit einer Versorgungsspannung versorgt wird.

10. Energiesparschaltung (3) nach einem der Ansprüche 1 bis 9, **dadurch gekennzeichnet, dass**
der Datenbus wenigstens eine Datenleitung (D+, D-) aufweist und die Energiesparschaltung (3) eine Unterbrechungsschaltung (20) zum Unterbrechen der wenigstens einen Datenleitung (D+, D-) umfasst, wobei die Steuerschaltung (9) dazu eingerichtet ist, die wenigstens eine Datenleitung (D+, D-) bei Erkennen eines Leerlaufzustandes zu unterbrechen.

11. Energiesparschaltung (3) nach einem der Ansprüche 1 bis 10, **dadurch gekennzeichnet, dass**
der Datenbus ein serieller Datenbus, insbesondere ein USB-Datenbus ist.

12. Peripheriegerät (2), umfassend:
- einen Anschluss zur Kopplung des Peripheriegerätes (2) mit einem Hostsystem (1);
- wenigstens eine Systemkomponente zum Bereitstellen einer Gerätefunktion des Peripheriegerätes (2) in einem Betriebszustand; und
- eine Energiesparschaltung (3) nach einem der Ansprüche 1 bis 11, die elektrisch zwischen dem Anschluss und der Systemkomponente angeordnet ist.

13. Vermittlungsgerät (27) für einen Datenbus zur Vermittlung einer Datenübertragung von einem Hostsystem (1) zu einem Peripheriegerät (2), umfassend:
- wenigstens einen ersten Anschluss (12) zur Kopplung des Vermittlungsgerätes (27) mit dem Hostsystem (1);
- wenigstens einen zweiten Anschluss (13) zur Kopplung des Vermittlungsgerätes (27) mit dem Peripheriegerät (2); und
- wenigstens eine Energiesparschaltung (3) nach einem der Ansprüche 1 bis 11, die elektrisch zwischen dem ersten Anschluss (12) und dem zweiten Anschluss (13) angeordnet ist.

14. Vermittlungsgerät nach Anspruch 13, **gekennzeichnet durch** wenigstens einen Schaltwandler (10) zur Bereitstellung einer Betriebsspannung für das Vermittlungsgerät (27) sowie zur Versorgung von an das Vermittlungsgerät (27) angeschlossener Peripheriegeräte (2), wobei die Energiesparschaltung dazu eingerichtet ist, die Versorgung der **durch** den Schaltwandler (10) versorgbaren Peripheriegeräte (2) bei Erkennung eines Leerlaufzustands zu unterbrechen.

15. Arbeitsverfahren für eine zwischen einem Hostsystem (1) und einem Peripheriegerät (3) angeordneten Energiesparschaltung (3) nach einem der Ansprüche 1 bis 11, umfassend:
- Ermitteln eines Verbindungszustands des Peripheriegerätes (2);
- Erkennen eines Leerlaufzustands des Datenbusses durch Überwachen des Datenbusses;
- Halten des Verbindungszustands des Peripheriegerätes (2) durch Bereitstellen eines Steuersignals für das Hostsystem (1) ; und
- Auftrennen einer dem Peripheriegerät (2) zugeordneten Stromversorgungsleitung durch Öffnen wenigstens eines Schaltelementes (6, 18).
